# EUROPÄISCHE PATENTANMELDUNG

(11) **EP 0 709 422 A2**
(43) Veröffentlichungstag der Anmeldung: **01.05.1996**
(21) Anmeldenummer: 95116138.9
(22) Anmeldetag: 13.10.1995
(51) Int. Cl.: C08G 77/08

(54) **Aktivator zur Depolymerisation von gegebenenfalls füllstoffhaltigen vernetzten und/oder unvernetzten Polysiloxanen**

(30) Priorität: 26.10.1994 DE 4438175
(71) Anmelder: BAYER AG, D-51368 Leverkusen (DE)
(72) Erfinder: Friebe, Robert, Dr., D-51373 Leverkusen (DE); Weber, Wilhelm, Dr., D-51373 Leverkusen (DE); Sockel, Karl-Heinz, D-51373 Leverkusen (DE)

(57) **Zusammenfassung**

Die Erfindung betrifft einen Aktivatoren zur Depolymerisation von vernetzten, gegebenenfalls füllstoffhaltigen und/oder unvernetzten Polysiloxanen, ein Verfahren zur Depolymerisation von vernetzten, gegebenenfalls füllstoffhaltigen und/oder unvernetzten Polysiloxanen und deren Verwendung.

## Beschreibung

Die Erfindung betrifft Aktivatoren zur Depolymerisation von vernetzten, gegebenenfalls füllstoffhaltigen und/oder unvernetzten Polysiloxanen, Verfahren zur Depolymerisation von vernetzten, gegebenenfalls füllstoffhaltigen und/ oder unvernetzten Polysiloxanen und dessen Verwendung.

Siliconprodukte, wie z.B. Dichtstoffe, Elastomere, Harze oder Kleber, haben wegen ihrer ausgezeichneten Widerstandsfähigkeit gegenüber Umwelteinflüssen ein großes Anwendungsgebiet. Ihre Unlöslichkeit, ihre Resistenz gegen den Angriff von Chemikalien und ihre Stabilität gegen Temperaturbelastung machen sie zu begehrten Werkstoffen. Die Unlöslichkeit des einmal gebildeten Netzwerks der Silicondichtstoffe kann aber auch Nachteile mit sich bringen. So müssen beispielsweise Verschmutzungen bei Silicondichtstoffen durch unsaubere Arbeitsweise oder alte Dichtungen in der Regel mechanisch entfernt werden. Dabei verbleibt oft restlicher Silicongummi auf dem Substrat, der meist den Reinigungsbemühungen widersteht.

In DE 43 00 168 wird gezeigt, wie ausgehärtete Silicongummireste mittels Alkylbenzolsulfonsäuren entfernt werden können, die auch schon bei der Herstellung von Polysiloxanen als Katalysatoren verwendet werden. Nachteilig kann bei vielen Substraten sein, daß es sich dabei um starke Säuren handelt, die als korrosiv und ätzend ausgewiesen sind.

Aufgabe der vorliegenden Erfindung war daher die Bereitstellung eines möglichst rasch wirksamen, nicht korrosiven und, in bezug auf die Säurestärke, milden Aktivators für die Depolymerisation.

Überraschenderweise wurde nun gefunden, daß Phosphorsäure und/oder bestimmte Ester der Phosphorsäure eine schnelle Depolymerisation von vernetzten bzw. unvernetzten Polysiloxanen ermöglichen.

Gegenstand der vorliegenden Erfindung ist daher ein Aktivator zur Depolymerisation von vernetzten, gegebenenfalls füllstoffhaltigen Polysiloxanen, enthaltend Phosphorsäure und/oder Mono- und/oder Diester der Phosphorsäure der folgenden allgemeinen Formel (I)

O=P(OH)ₙ(OR)₃₋ₙ

sowie daraus abgeleitete Polykondensationsprodukte, worin n 1, 2 oder 3 ist und der Rest R die Bedeutung von aromatischen Resten, wie z.B. Phenyl-, Toluyl- oder Mesitylresten, gesättigten, ungesättigten, geradkettigen oder verzweigten aliphatischen Kohlenwasserstoffresten mit 1 bis 20 Kohlenstoffatomen
und bei n = 1 die Reste R gleich oder voneinander verschieden sein können.

Gegenstand der vorliegenden Erfindung sind zudem Aktivatoren zur Depolymerisation von vernetzten und/oder unvernetzten Polysiloxanen, enthaltend Phosphorsäure und/oder Mono- und/oder Diester der Phosphorsäure der folgenden allgemeinen Formel (I)

O=P(OH)ₙ(OR)₃₋ₙ

sowie daraus abgeleitete Polykondensationsprodukte,
worin n 1, 2 oder 3 ist und der Rest R die Bedeutung von aromatischen, gesättigten, ungesättigten, geradkettigen oder verzweigten aliphatischen Kohlenwasserstoffresten mit 1 bis 20 Kohlenstoffatomen hat,
und bei n = 1 die Reste R untereinander gleich oder voneinander verschieden sein können, und mindestens einen weiteren Hilfsstoff.

Depolymerisierbare vernetzte und/oder unvernetzte Polysiloxane im Sinne der Erfindung sind alle bekannten linearen Siloxane, wie z.B. α,ώ-Dihydroxypolydimethylsiloxane, dimethylvinylsiloxy oder trimethylsiloxy-endgestoppte Polydimethylsiloxane alle bekannten Siliconharze sowie alle bekannten additions-, kondensations-und radikalisch vernetzten Polysiloxane, die gegebenenfalls Füllstoffe enthalten, wie z.B. vernetzte Silicondichtstoffe.

Beispiele für die erfindungsgemäßen Phosphorsäureester sind: Dibutylphosphat, Monobutylphosphat, Bis-(2-ethylhexyl)-phosphat oder Mono-isononylphosphat. Der alleinige Einsatz von Phosphorsäure ist aufgrund ihrer hochviskosen Konsistenz weniger bevorzugt. In einer bevorzugten Ausführungsform der vorliegenden Erfindung ist der Aktivator ein Mono- und/oder Diester der Phosphorsäure.

Die Aktivatoren können auch mehreren Mono- bzw. mehreren Diestern entsprechen.

In einer Ausführungsform der vorliegenden Erfindung enthält der Aktivator einen oder mehrere Hilfsstoffe. Die Art und die Menge der Hilfsstoffe richtet sich danach, ob der Aktivator in Abhängigkeit von der jeweiligen Anwendung pastös, flüssig oder gelartig sein muß.

Hilfsstoffe im Sinne der Erfindung sind beispielsweise saure oder neutrale Füllstoffe, wie pyrogene oder gefällte, gegebenenfalls hydrophobierte Kieselsäure, Paraffine und andere rheologische Hilfsmittel, wie z.B. Schichtsilikate (Bentonite) in Kombination mit einem Lösemittel.

Als Lösemittel sind viele organische Lösemittel geeignet, wie beispielsweise Halogenkohlenwasserstoffe, Ester, Ether, gesättigte, ungesättigte, aliphatische und aromatische verzweigte C₇-C₃₀-Kohlenwasserstoffe und Carbonsäuren. Bevorzugt sind flüssige Carbonsäuren, besonders bevorzugt Carbonsäuren mit mindestens 6 Kohlenstoffatomen, beispielsweise 2-Ethylhexansäure, da diese den Auflösungsvorgang beschleunigen.

Besonders bevorzugt als Hilfsstoffe sind, insbesondere bei vernetzten und/oder unvernetzten Polysiloxanen, Mischungen aus aliphatischen, naphthenischen und aromatischen Kohlenwasserstoffen, wie z.B. Kristallöl K 60 oder kurzkettige Polysiloxane der allgemeinen Formel 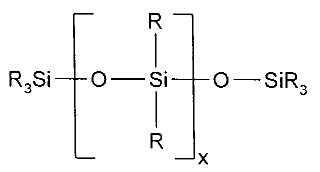
mit R = C₁-C₆-alkyl oder Phenyl, bevorzugt R = Methyl, wobei die Reste innerhalb des Moleküls gleich oder ungleich sein können und x = 0 bis 20, bevorzugt 0 bis 10.

In einer bevorzugten Ausführungsform der vorliegenden Erfindung enthält der Aktivator Mono- und/oder Diester der Phosphorsäure und/oder Phosphorsäure, mindestens einen Füllstoff und/oder ein Lösemittel. In diesem Fall ist als Füllstoff pyrogene Kieselsäure und als Lösemittel 2-Ethylhexansäure besonders bevorzugt.

Zur Herstellung des erfindungsgemäßen Aktivators wird die Phosphorsäure und/oder der Mono- und/oder Diester der Phosphorsäure direkt mit den gegebenenfalls vorhandenen Hilfsstoffen verrührt. Gegebenenfalls wird nach Ende des Mischvorganges durch kurzes Evakuieren entgast.

Pastöse Aktivatoren können durch Zugabe von Füllstoffen, beispielsweise pyrogene oder gefällte, gegebenenfalls hydrophobierte Kieselsäure oder rheologische Hilfsmittel, beispielsweise Schichtsilikate (Bentonite), hergestellt werden. Die erfindungsgemäßen Phosphorsäureester können direkt mit den Füllstoffen zu pastösen Massen verarbeitet werden, diese können jedoch auch vorher in einem der oben genannten Lösemittel gelöst werden. Das Fließverhalten der beispielsweise mit pyrogener Kieselsäure eingedickten Pasten wird durch die mit der Kieselsäure eingebrachte Wassermenge beeinflußt. Zum Eindicken bzw. Standfestmachen können 0,1 bis 5 % Wasser zugegeben werden.

Die erfindungsgemäßen Aktivatoren können je nach Anwendungsfall in ihrer Zusammensetzung in weiten Grenzen hergestellt werden.

Gegenstand der vorliegenden Erfindung ist zudem ein Verfahren zur Depolymerisation von vernetzten, gegebenenfalls füllstoffhaltigen und/oder unvernetzten Polysiloxanen, wonach der erfindungsgemäße Aktivator mit den Polysiloxanen und mindestens einem Hilfsstoff in Kontakt gebracht wird.

Die Kontaktzeit des Polysiloxans mit dem Aktivator ist dabei von der Dicke des Polysiloxans und dessen Vernetzungsgrad abhängig.

In dem erfindungsgemäßen Verfahren kann die Depolymerisation in einem weiten Temperaturbereich erfolgen. Die Depolymerisation der Silicone wird durch Temperaturerhöhung beschleunigt. Bei Raumtemperatur benötigt man für das Auflösen einer dünnen Silikonschicht zwischen 1 und 4 Stunden. Zur Depolymerisation von vernetzten Polysiloxanen, die basische Füllstoffe enthalten, muß der Aktivator aufgrund der Neutralisationsreaktion im deutlichen Überschuß eingesetzt werden. Bei dickeren Schichten ist eine Mehrfachanwendung günstig. Der größte Teil des Siliconmaterials wird im Fall von Silicondichtstoffen meist vor der Anwendung des Entferners mechanisch entfernt.

Der Aktivator kann dabei, vom Bedarfsfall abhängig, frei von Hilfsstoffen oder mit Hilfsstoffen eingesetzt werden. Die Wirksamkeit wird vor allem durch Phosphorsäure-oder Phosphorsäureesterkonzentration bestimmt. In der Regel enthält die Aktivatormischung mindestens 5 % Phosphorsäureester. Zum Verdicken werden bevorzugt zwischen 1 und 25 % pyrogener Kieselsäure verwendet, besonders bevorzugt 5 bis 15 %. Zur Herstellung standfester Phasen hat sich die Zugabe von 0,5 bis 2 % Wasser als besonders günstig erwiesen.

Gegenstand der vorliegenden Erfindung ist zudem die Verwendung des erfindungsgemäßen Aktivatoren zur Depolymerisation von vernetzten und/oder unvernetzten Polysiloxanen. In einer Ausführungsform der vorliegenden Erfindung wird der erfindungsgemäße Aktivator zur Depolymerisation von ausgehärteten Silicondichtstoffen verwendet.

Die nachfolgenden Beispiele dienen zur Erläuterung der Erfindung, ohne jedoch limitierend zu wirken.

### Ausführungsbeispiele

### 1. Abbau von vernetzten Polysiloxanen

### Beispiel 1

In einem Mischer werden 34,0 Gew.-Teile Bis-(2-ethylhexyl)-phosphat in 50,5 Gew.-Teilen Isoeicosan, einem gesättigten, verzweigten Kohlenwasserstoff (Isoparaffin C20-Anteil > 90 %) gelöst. Anschließend werden 15,5 Gew.-Teile einer pyrogenen Kieselsäure (150 m²/g) in drei Portionen eingemischt, 10 Minuten nachgerührt und das Gemisch bei 50 mbar entgast. Man erhält ein transparentes pastöses bis geliges Produkt.

### Beispiel 2

10 Gew.-Teile einer pyrogenen Kieselsäure mit einer Oberfläche von 150 m²/g werden in drei Portionen in 90 Gew.-Teilen einer Mischung aus Mono- und Diisononylphosphat mit der ungefähren molaren Zusammensetzung 1:1 eingemischt. Anschließend wird noch 10 Minuten nachgerührt und das Gemisch bei 50 mbar entgast. Das erhaltene Produkt ist eine mittelviskose Flüssigkeit.

### Beispiel 3

In eine Mischung aus 27,0 Gew.-Teilen Bis-(2-ethylhexyl)-phosphat und 63,0 Gew.-Teilen 2-Ethylhexansäure werden 10,0 Gew.-Teile einer pyrogenen Kieselsäure in drei Portionen eingemischt. Anschließend wird die Mischung noch 10 Minuten gerührt. Dann werden 0,5 Gew.-Teile Wasser untergerührt und die Mischung bei 50 mbar entgast. Man erhält ein pastöses, standfestes Produkt.

### Beispiel 4 (Vergleich)

Es wird wie in Beispiel 3 verfahren, nur mit dem Unterschied, daß statt einer Mischung aus Bis-(2-ethylhexyl)-phosphat und 2-Ethylhexansäure 90,0 Gew.-Teile 2-Ethylhexansäure verwendet werden.

Die Aktivatoren aus den Beispielen 1, 2, 3 und 4 wurden wie folgt geprüft:
Auf Glasplatten wurde ein essighärtender, transparenter Silicondichtstoff, bestehend aus 60,2 Gew.-Teilen OH-endgestopptem Polydimethylsiloxan der Viskosität 50 Pas, 25,0 Gew.-Teilen trimethylsiloxyendgestopptem Polydimethylsiloxan der Viskosität 1 Pas, 4,0 Gew.-Teilen Ethyltriacetoxysilan, 9,5 Gew.-Teilen pyrogener Kieselsäure mit einer spezifischen Oberfläche von 150 m²/g und 0,01 Gew.-Teilen Dibutylzinndiacetat aufgetragen und eine Woche lang ausgehärtet. Die Prüflinge waren 1 cm breit, etwa 4 cm lang und 2 mm dick. Die Aktivatoren aus den Beispielen 1 bis 4 wurden mit 1 bis 2 mm Schichtdicke aufgetragen. In Abhängigkeit von der Einwirkungszeit wurde mittels eines Spatels geprüft, ob sich das Siliconelastomer leicht mechanisch entfernen läßt.

Die Versuchsergebnisse sind in der nachfolgenden Tabelle 1 aufgeführt:

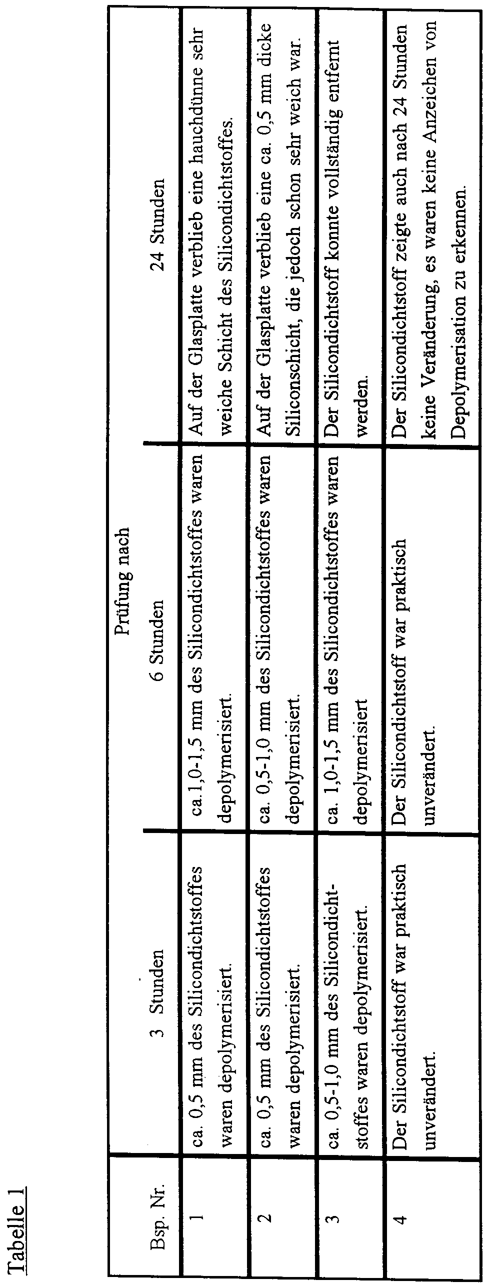

### Beispiel 5

Es wird analog Beispiel 1 verfahren und eine Silikonentfernerpaste aus 45 Gew.-Teilen Bis-(2-ethylhexyl)-phosphat, 45 Gew.-Teilen Kristallöl K 60 (Gemisch aliphatischer, naphthenischer und aromatischer Kohlenwasserstoffe, CAS Nr. 64742-88-7, erhältlich bei der Fa. Grüssing GmbH, Filsum), 9,5 Gew.-Teilen einer pyrogenen Kieselsäure mit einer spezifischen Oberfläche von 150 m²/g und 0,5 Gew.-Teilen Wasser hergestellt. Die Prüfergebnisse können Tabelle 2 entnommen werden.

### Beispiel 6

Es wird analog Beispiel 5 verfahren und eine Paste aus 42,5 Gew.-Teilen Bis-(2-ethylhexyl)-phosphat, 42,5 Gew.-Teilen eines kurzkettigen Polydimethylsiloxans der mittleren Zusammensetzung (CH₃)₃SiO[Si(CH₃)₂O]₄Si(CH₃)₃ und 15 Gew.-Teilen eines Paraffins (Erstariungspunkt 69 bis 73°C, erhältlich bei der Fa. Merck, Darmstadt) hergestellt. Um eine homogene Masse herzustellen, war es notwendig, das Gemisch auf ca. 100°C zu erhitzen (Prüfergebnisse siehe Tabelle 2).

**Tabelle 2**

| Beispiel Nr. | Prüfung nach ca. 18 Stunden¹⁾ |
|---|---|
| 5 | Silicondichtstoff fast vollständig aufgelöst |
| 6 | Silicondichtstoff vollständig aufgelöst |

| | |
|---|---|
| ¹⁾ Die Prüfungen wurden mit einem transparenten vulkanisierten Dichtstoff mit einer Schichtdicke von ca. 2 mm durchgeführt. | |

### Beispiel 7

Im folgenden wurden eine Reihe verschiedener Versuche durchgeführt, wobei jedoch auf die Herstellung einer Siliconentfernerpaste verzichtet wurde und jeweils nur die depolymerisierende Wirkung der Zusammensetzung beurteilt wurde. Dabei wurde zunächst eine Mischung der in Tabelle 3 angegebenen Zusammensetzung hergestellt und anschließend in einem kleinen Glasröhrchen von ca. 8 ml Fassungsvermögen ein vulkanisierter transparenter Dichtstoffstreifen mit einer Dicke von ca. 2 mm, einer Länge von 25 mm und einer Breite von 5 mm mit ca. 5 ml der entsprechenden Mischung überschichtet und nach der angegebenen Zeit die Wirkung beurteilt.

Die Versuche dienen dem Nachweis, daß Katalysatoren von denen eine abbauende Wirkung auf Siliconpolymere bekannt ist, nicht auch ohne weiteres zur Depolymerisation von vulkanisierten Siliconelastomeren geeignet sind. Dies bezieht sich insbesondere auf Bedingungen, bei denen eine Siliconentfernerpaste in der Praxis eingesetzt werden würde, d.h. bei Raumtemperatur durch Auftragung der Paste auf die zu entfernende Siliconelastomerschichten.

**Tabelle 3**

| **Beispiel 7** | **Zusammensetzung der flüssigen Mischung** | **Prüfung des Dichtstoffs nach ca. 18 Stunden** |
|---|---|---|
| **a** | 100 % Bis-(2-ethylhexyl)-phosphat | Dichtstoff leicht angelöst |
| **b** | 50 % Bis-(2-ethylhexyl)-phosphat, 50 % Cyclohexan | Dichtstoff fast vollständig aufgelöst |
| **c** | 50 % Bis-(2-ethylhexyl)-phosphat, 50 % Kristallöl K 60 | Dichtstoff fast vollständig aufgelöst |
| **d** | 50 % Bis-(2-ethylhexyl)-phosphat, 50 % Siloxan 1 | Dichtstoff fast vollständig aufgelöst |
| **e**^{**2)**} | 100 % Siloxan 1 | Dichtstoff nicht angegriffen, leicht angequollen |
| **f**^{**2)**} | 100 % Kristallöl K 60 | Dichtstoff nicht angegriffen, leicht gequollen |
| **g**^{**2)**} | 90 % Siloxan 1, 10 % Cäsiumhydroxid | Dichtstoff angequollen, nicht aufgelöst |
| **h** | 48% Methanol, 50% Methyltrimethoxysilan, 2% NaOH | keine Veränderung des Dichtstoffs |
| **i** | 98% Methanol, 2% NaOH | keine Veränderung des Dichtstoffs |
| **j** | 100% Cyclohexan | Dichtstoff leicht angequollen, kein Abbau |
| Siloxan 1: kurzkettigen Polydimethylsiloxans der mittleren Zusammensetzung (CH₃)₃SiO[Si(CH₃)₂O]₄Si(CH₃)₃ | | |

| | | |
|---|---|---|
| ²⁾ Vergleichsversuch | | |

Wie aus Tabelle 3 ersichtlich ist, bauen unter diesen Bedingungen nur die Zusammensetzungen mit dem Bis-(2-ethylhexyl)-phosphat die vulkanisierten Siliconelastomere ab. Dabei kann weiterhin festgestellt werden, daß die abbauende Wirkung durch den Zusatz von Lösemitteln wie beispielweise Cyclohexan verstärkt wird.

### 2. Abbau von unvernetzten Polysiloxanen

Mit den im folgenden aufgeführten Versuchen soll die abbauende Wirkung von Phosphorsäureestern und Natriumhydroxid, das ein bekannter Katalysator für den Abbau von Siliconpolymeren ist (z.B. DE OS 40 22 661), gezeigt werden. Die Versuche wurden dabei mit einem Dimethylvinylsiloxy-endgestoppten Polydimethylsiloxan einer Viskosität von ca 65 Pas bei 25°C (erhältlich bei der Fa. Bayer AG unter dem Namen Silopren® U 65) durchgeführt. Die abbauende Wirkung wurde dabei durch Messung der Viskosität der entsprechenden Katalysator/Siliconpolymer Mischung im Verlauf der Zeit dokumentiert. Die Abnahme der Viskosität ist ein eindeutiges Indiz für polymerabbauende Wirkung des entsprechenden Katalysators. Die Viskositätsmessungen wurden mit einem Rotationsviskosimeter der Fa. Haake vorgenommen, wobei lediglich die relative Änderung der Viskosität ermittelt und in Skalenteilen angegeben wurde. Die entsprechenden Ergebnisse hierzu können Tabelle 4 entnommen werden.

**Tabelle 4**

| **Beispiel** | **Zusammensetzung der Mischung** | **Zeit [min]** | **Viskosität [Skalenteile]** |
|---|---|---|---|
| **8** | 98% Silopren® U65, 2% Bis-(2-ethylhexyl)-phosphat | 2 | 27,0 |
| | | 7 | 27,5 |
| | | 17 | 19,5 |
| | | 53 | 12,5 |
| | | 81 | 11,5 |
| | | 184 | 11,0 |
| **9** | 96% Silopren® U65, 2% Bis-(2-ethylhexyl)-phosphat, 2% Cyclohexan | 3 | 20,5 |
| | | 28 | 12,0 |
| | | 34 | 11,0 |
| | | 104 | 7,0 |
| **10** | 96% Silopren® U65, 2% Bis-(2-ethylhexyl)-phosphat, 2% 2-Ethlyhexansäure | 7 | 21,5 |
| | | 22 | 17,5 |
| | | 61 | 11,0 |
| | | 77 | 9,0 |
| **11** | 98% Silopren® U65, 2% Mischung 1 | 0 | 30,0 |
| | | 60 | 28,5 |
| | | 280 | 24,5 |
| | | 1260 | 12,0 |
| **12** | 98% Silopren® U65, 2% Mischung 2 | 0 | 28,0 |
| | | 60 | 20,0 |
| | | 280 | 7,0 |
| | | 1260 | 0,5 |
| Mischung 1: 98% Methanol, 2% NaOH Mischung 2: 48% Methanol, 48% Methyltrimethoxysilan, 2% NaOH | | | |

Wie die Versuchsergebnisse zeigen, baut sowohl der verwendete Phosphorsäureester als auch Natriumhydroxid das Siliconpolymer ab. Dabei wird an den relativen Viskositätsänderungen deutlich, daß das Bis-(2-ethylhexyl)-phosphat einen stärkeren Viskositätsabbau nach kürzeren Zeiten bewirkt und eine Kombination mit den erfindungsgemäßen Hilfsstoffen wie Cyclohexan und 2-Ethylhexansäure die abbauende Wirkung auf das Siliconpolymer im Vergleich zum reinen Bis-(2-ethylhexyl)-phosphat (Beispiele 8 bis 10) deutlich verstärkt.

## Patentansprüche

1. Aktivator zur Depolymerisation von vernetzten Polysiloxanen, enthaltend Phosphorsäure und/oder Mono- und/oder Diester der Phosphorsäure der folgenden allgemeinen Formel (I)
O=P(OH)ₙ(OR)₃₋ₙ
sowie daraus abgeleitete Polykondensationsprodukte,
worin n 1, 2 oder 3 ist und der Rest R die Bedeutung von aromatischen, gesättigten, ungesättigten, geradkettigen oder verzweigten aliphatischen Kohlenwasserstoffresten mit 1 bis 20 Kohlenstoffatomen hat,
und bei n = 1 die Reste R untereinander gleich oder voneinander verschieden sein können.

2. Aktivator nach Anspruch 1, dadurch gekennzeichnet, daß der Aktivator ein Mono- und/oder Diester der Phosphorsäure ist.

3. Aktivator nach einem der Ansprüche 1 bis 2, dadurch gekennzeichnet, daß der Aktivator einen oder mehrere Hilfsstoffe enthält.

4. Aktivator nach Anspruch 3, dadurch gekennzeichnet, daß der Hilfsstoff mindestens ein Füllstoff und/oder ein Lösemittel ist.

5. Aktivator nach Anspruch 4, dadurch gekennzeichnet, daß der Füllstoff pyrogene Kieselsäure und das Lösemittel 2-Ethylhexansäure ist.

6. Aktivator zu Depolymerisation von vernetzten und/oder unvernetzten Polysiloxanen, enthaltend Phosphorsäure und/oder Mono- und/oder Diester der Phosphorsäure der folgenden allgemeinen Formel (I)
O=P(OH)ₙ(OR)₃₋ₙ
sowie daraus abgeleitete Polykondensationsprodukte,
worin n 1, 2 oder 3 ist und der Rest R die Bedeutung von aromatischen` gesättigten, ungesättigten, geradkettigen oder verzweigten aliphatischen Kohlenwasserstoffresten mit 1 bis 20 Kohlenstoffatomen hat,
und bei n = 1 die Reste R untereinander gleich oder voneinander verschieden sein können und mindestens einen weiteren Hilfsstoff.

7. Aktivator nach Anspruch 6, dadurch gekennzeichnet, daß der Hilfsstoff 2-Ethylhexansäure, eine Mischung aus aliphatischen, naphthenischen und aromatischen Kohlenwasserstoffen und/oder kurzkettigen Polysiloxanen der allgemeinen Formel R₃Si-[OSi(R)₂]ₓ-OSiR₃ mit R = C₁-C₆-Alkyl oder Phenyl, wobei die Reste innerhalb des Moleküls gleich oder ungleich sein können und x = 0 bis 20 ist.

8. Verfahren zur Depolymerisation von vernetzten, gegebenenfalls füllstoffhaltigen und/oder unvernetzten Polysiloxanen, dadurch gekennzeichnet, daß zur Depolymerisation ein Aktivator nach einem der Ansprüche 1 bis 7 mit den Polysiloxanen in Kontakt gebracht wird.

9. Verwendung der Aktivatoren nach einem der Ansprüche 1 bis 6 zur Depolymerisation von ausgehärteten Silicondichtstoffen.
